# EUROPEAN PATENT SPECIFICATION

(11) **EP 2 109 280 B1**
(45) Date of publication and mention of the grant of the patent: **09.01.2013**
(21) Application number: 08154391.0
(22) Date of filing: 11.04.2008
(51) Int. Cl.: H04L 29/06, H04L 29/08

(54) **Method and system for throttling or blocking geographical areas for mitigation of distributed denial of service attacks using a graphical user interface**
Verfahren und System zur Drosselung oder Blockierung geografischer Bereiche zur Abschwächung verteilter Dienstverweigerungsangriffe mittels einer grafischen Benutzerschnittstelle
Procédé et système pour accélérer ou bloquer des zones géographiques pour la réduction d'attaques distribuées de refus de service utilisant une interface d'utilisateur graphique

(43) Date of publication of application: 14.10.2009
(73) Proprietor: Deutsche Telekom AG, 53113 Bonn (DE)
(72) Inventor: Roshandel, Mehran, 13591 Berlin (DE); Goldstein, Markus, 67655 Kaiserslautern (DE); Reif, Matthias, 67663 Kaiserslautern (DE); Stahl, Armin, 67663 Kaiserslautern (DE); Breue, Thomas, 67655 Kaiserslautern (DE)
(74) Representative: Vossius & Partner

(56) References cited:
- US-A1- 2006 010 389
- US-A1- 2006 267 802
- BLOCK A COUNTRY.COM: "Blockacountry"[Online] 21 August 2007 (2007-08-21), XP002498516 Retrieved from the Internet: URL:http://web.archive.org/web/20070821043 618/http://blockacountry.com/> [retrieved on 2008-10-06]
- AZIM YASIN: "The DDOS"[Online] 20 February 2008 (2008-02-20), XP002498517 Retrieved from the Internet: URL:http://azimyasin.wordpress.com/2008/02 /16/the-ddos/> [retrieved on 2008-10-06]
- J. GAUTHIER, S. SETHI, M. WEATLEY: "Geographical Event Mapping System (GEMS)" UNIVERSITY OF MANITOBA, [Online] 1 May 2006 (2006-05-01), XP002498518 Retrieved from the Internet: URL:http://gems.ee.umanitoba.ca/docs/stude nt-final-0406.pdf> [retrieved on 2008-10-06]
- REMOTE TECHNOLOGY MANAGEMENT: 'Country IP Blocks', [Online] 11 January 2008, Retrieved from the Internet: <URL:http://web.archive.org/web/20080111105 315/www.countryipblocks.net/index.php> [retrieved on 2009-12-08]

## Description

### Field of the Invention

The invention generally relates to mitigation of Distributed Denial of Service (DDoS) attacks on public available Internet services. Examples of such services include websites, Internet telephony (VoIP), FTP server, DNS, etc.

### Background of the Invention

In the Internet, Distributed Denial of Service attacks (DDoS) have become a major threat today. Large scaled networks of infected PCs (bots or zombies) combine their bandwidth and computational power in order to overload a publicly available service and denial it for legal users. All public servers are basically vulnerable to DDoS attacks due to the open structure of the Internet. The bots are usually acquired automatically by hackers who use software tools to scan through the network, detecting vulnerabilities and exploiting the target machine.

The number of such DDoS incidents is steadily increasing. For example, the attacks against large e-commerce sites in February 2000 and the attacks against root DNS servers in 2003 and 2007 have drawn public attention to the problem of DDoS attacks. Today, mainly mid-sized websites are attacked by criminals in order to extort protection money from their owners without attracting too much public attention. Besides that, also Internet Service Providers (ISP) have to deal with the problem that DDoS traffic is congesting their link bandwidths.

The bot software also evolved alarmingly over time. Early tools like *TFN, Stacheldraht, Trinoo* or *Mstream* used unencrypted and hierarchically organized communication structures. Most of these tools used TCP-SYN, UDP or ICMP floods with possibly identifiable parameters. Since some of these attacks have successfully been mitigated, a new generation of bots arose. *SDBot, Agobot* or the very enhanced *Phatbot* are known representatives which use IRC as a robust and secure communication. These tools also contain methods for spreading themselves and have more sophisticated attack algorithms, which could be upgraded over the Internet. The attack traffic from those tools looks like legal traffic on the transport layer, which makes it nearly impossible to filter it effectively with standard firewalls.

Mitigating DDoS attacks at the origin or within the core of the Internet seems to be an impossible task due to the distributed and authorization-free nature of the IP based network. Approaches to achieve this objective typically rely on changing current internet protocols and are therefore not easily applicable. Ingress filtering as described in RFC 2827 (P. Ferguson and D. Senie, "Network ingress filtering: Defeating denial of service attacks which employ ip source address spoofing," United States, 2000, available at: http://rfc.net/rfc2827.html.) also helps mitigating DDoS attacks with forged source IP addresses (IP spoofing) and should be applied by every ISP. Since ingress filtering only helps other ISPs on the Internet and not the one who is actually applying it, it took quite a long time until it was setup in many places. Furthermore, Savage et al. (S. Savage, D. Wetherall, A. R. Karlin, and T. Anderson, "Practical network support for IP traceback," in SIGCOMM, 2000, pp. 295-306) suggested IP Traceback to find the source of spoofed IP addresses by probabilistically marking packets. Nowadays, IP spoofing is not that common any more in DDoS attacks, except for the last octet of an IP address.

A known system to mitigate attacks is Radware's DefensePro with the APSolute operating system (http"//www.radwar.com/Products/ApplicationNetworkSecurity/DefensePro.aspx). According to this system, the IP packets are examined for common striking features, for example identical packet sizes, source- and target ports etc. This system performs well in case of only a small number of attack sources, since attacker generate comparably high number of requests or in case of having identical attack packets.

Thus, today, there is a strong need to mitigate DDoS attacks near the target, which seems to be the only solution to the problem in the current internet infrastructure. The aim of such a protection system is to limit their destabilizing effect on the server through identifying malicious requests.

Thus, Distributed Denial of Service (DDoS) attacks are today the most destabilizing factor in the global Internet and there is a strong need for sophisticated solutions.

Typically, computer systems are protected by a security component, a firewall. The configuration of such a firewall is made via sets of rules that describe the features of incoming packets that are allowed to pass the firewall or are to be rejected. The parameters for a rule are diverse and depend on the system used. In many cases protocol, target port and source port, target and source network address and flow direction of the data packet are indicated. In the Internet, the target and source network address consists of the IP address (which is an abstract computer address) and the network mask. The rejecting or allowing-to-pass a plurality of not connected intervals requires the definition of many rules for the firewall. However, since there is no direct relationship between IP addresses and geographical location of a computer, a large number of such rules is in fact necessary to define a country, for example.

Related technology is described in US 2006/267802, US 2006/010389, or Remote Technology Management "Country IP Blocks", January 11, 2008.

### Summary of the Invention

The invention starts out from the idea of monitoring the actual requests to a computer system and preventing over load situations on the basis of information about the geographical origin of the requests with a graphical user interface (GUI).

According to a first aspect, the invention provides a method according to claim 1 of protecting a computer system from attacks over a network to which the computer system is connected, the method comprising the steps of (a) monitoring current requests to the computer system; (b) measuring one or more network features on the basis of the current requests; (c) providing a graphical user interface visualizing the measured one or more network features for at least one geographical area of origin of requests; (d) receiving a user input selecting at least one geographical area; (e) accessing on the basis of the selected at least one geographical area, a database associating, for the at least one geographical area of origin, each country with corresponding IP address ranges; and (f) automatically generating firewall rules for the computer system on the basis of the IP addresses retrieved from the database for the at least one selected geographical area. Step a) preferably also comprises accessing the database on the basis of the monitored IP addresses to retrieve therefrom information with respect to the country the monitored request is coming from.

The method comprises the further step g) of filtering a sender or requests from a sender depending on the generated firewall rules for the selected at least one geographical area. The step of filtering comprises of a bandwidth throttling algorithm, wherein the limit for a particular sender corresponds to the geographical area of origin. Thus, certain requests or sender are not completely blocked. Rather, the number of accepted requests or the provided bandwidth for a particular sender or country, for example, is throttled, i.e. some requests are delayed or even denied. Technically, this corresponds to an artificial limitation of the bandwidth available for this particular sender by queuing or dropping IP packets, also known as bandwidth throttling, traffic shaping or policing.

The sum of all limits for all senders is selected on the basis of the server load or bandwidth usage of the computer system.

The measured network features is preferably selected from the group comprising: country of origin, packet rates, application features, and transmission volume, or combinations thereof.

The graphical user interface preferably comprises a geographical map. According to a preferred embodiment, the graphical user interface provides different levels of geographical maps, the levels comprising world map, continental maps, local maps, individual country maps, city maps. The measured one or more network features for each geographical area are visualized by the graphical user interface in different graphical features. For example, the graphical feature is selected from the group comprising colour, graphical pattern, flashing or combinations thereof. The geographical area is, for example, selected from the group comprising country, province, state, or city.

According to the invention, a request is preferably an IP packet, an e-mail, a DNS request, a FTP download, a VoIP call, or a HTTP request.

According to a second aspect, the invention provides a system according to claim 10 for protecting computer systems from attacks over a network to which the computer system is connected.

### Brief Description of the Drawings

A preferred embodiment of the invention is described in more detail below with reference to the attached drawing, which is by way of example only.
Fig. 1 shows a data flow diagram according to a preferred embodiment of the invention; and
Fig. 2 shows an example for a graphical user interface in the form of a world map.

### Detailed Description

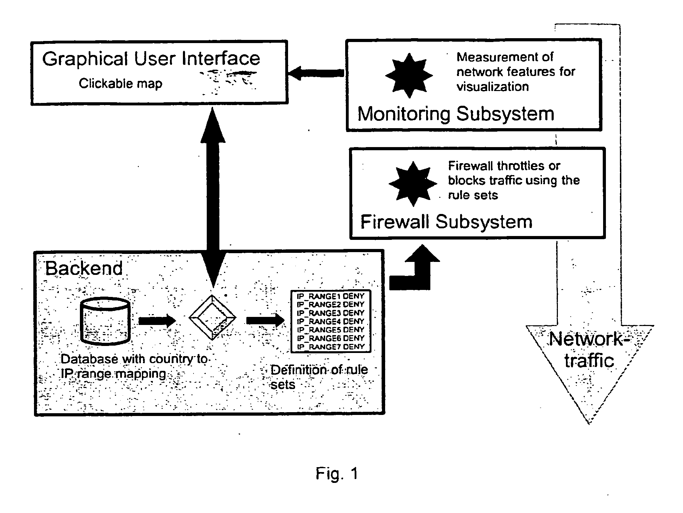

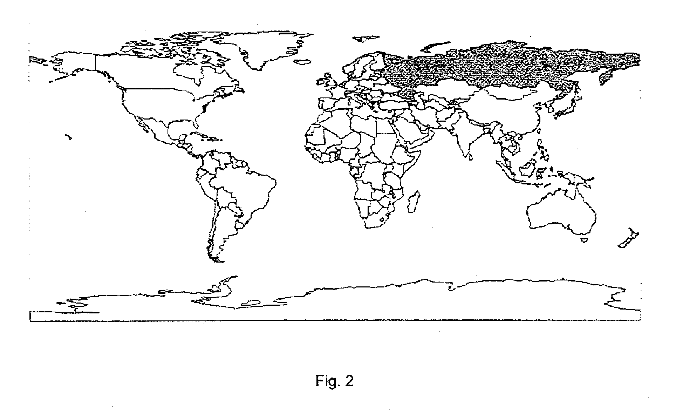

Fig. 1 shows a data flow diagram according to a preferred embodiment of the invention. As shown in Fig. 1, the system monitors the actual data traffic and measures network features with respect to geographical areas, such as countries. The measured network features are then processed for visualisation with a graphical user interface. An example of such graphical user interface will be described in detail with reference to the example shown in Fig. 2. The graphical user interface provides the user with details about the current Internet traffic and assists the user to identify attacks to the computer system. The origin of a (potential) attack can therefore easily and quickly located. With reference to the graphical user interface, the user of the computer system can select one or more geographical areas that appears to represent a threat to the computer system. Such selection causes the system to access a database that associates each geographical area, for example country, with corresponding IP addresses. On the basis of this information obtained from the database, the system automatically generates rules for the firewall as a protective measure against attacks.

According to the invention, certain requests or sender or countries are preferably not completely blocked if they are determined as being abnormal. Rather, the number of accepted requests from a country is reduced/restricted, i.e. some requests from a sender are accepted and some are rejected. This corresponds to an artificial limitation or throttling of the bandwidth available for this particular country. The overall number of requests to be rejected or the amount of throttle bandwidth is adjustable via the graphical user interface for an administrator so that an overload is prevented.

Fig. 2 shows an example of a part of a graphical user interface in the form of a world map. With such a graphical user interface, current Internet traffic can be visualised easily and quickly for assisting the automatic generation of firewall rules. Graphical user interfaces in the form of maps can be displayed at one or more levels. The highest level is represented by a world map as shown in Fig. 2. At respective lower levels selectable by a user areas such as individual continents, individual countries, provinces or states, or even individual cities can preferably be visualized.

The visualisation provides, for example by different colouring, the user with details about network features such as Internet traffic for each geographical area, for example on a per-country-basis. The example of Fig. 2 shows a dark colouring for Russia representing a for example abnormal high traffic volume originating from Russia, wherein the U.S.A. are coloured with a brighter colour representing less abnormal traffic from there. Instead of using different colours, different graphical pattern could be used to distinguish between areas having different traffic, or the country borders could be flashing at different frequencies to provide such details for each country.

The individual colour or pattern, for example, each correspond in the map to a value of the measured network feature, such as number of requests, transmission volume, or estimated number of attacker.

According to the invention, the system waits for a user input selecting a specific geographical area, for example a specific country. Such selection may be made with a computer mouse or touchpad or other input devices pointing on the desired country on the displayed map. Such selection initiates a corresponding action in the firewall system of the computer system. For example, by selecting a specific country, this country may be completely blocked or at least the traffic originating there from may be limited. For example, a bandwidth throttling algorithm may be initiated limiting the bandwidth for the selected country to 10MBit/s. For adjusting these limitation values, further graphical user interface elements are used (not shown in Fig. 2). Thus, the computer system is still fully available for all requests coming from other countries. User from this particular country are likely not successful in accessing the requested computer system.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. Method of controlling a firewall system for protecting a computer system from attacks over a network to which the computer system is connected, the method comprising the steps of:
a. monitoring current requests to the computer system;
b. measuring one or more network features on the basis of the current requests;
c. providing a graphical user interface visualizing the measured one or more network features for at least one geographical area of origin of requests, each of said at least one geographical area comprising at least one country;
d. receiving a user input selecting at least one geographical area;
e. accessing, on the basis of the selected at least one geographical area, a database associating, for the at least one geographical area of origin, each country with corresponding IP addresses;
f. automatically generating firewall rules for the computer system on the basis of the IP addresses retrieved from the database for the at least one selected geographical area; and
g. filtering a sender or requests from a sender depending on the generated firewall rules for the selected at least one geographical area, wherein the step of filtering comprises initiating a bandwidth throttling algorithm limiting the bandwidth for the selected at least one geographical area, wherein the limit for a particular sender corresponds to the geographical area of origin, and wherein the sum of all limits for all senders is selected on the basis of the server load or bandwidth usage of the computer system.

2. The method of claim 1, wherein step a) preferably also comprises accessing the database on the basis of the monitored IP addresses to retrieve therefrom information with respect to the country the monitored request is coming from.

3. The method of claim 1, wherein the measured network features is selected from the group comprising: country of origin, packet rates, application features, transmission volume, estimated number of requests in a defined time interval, or combinations thereof.

4. The method of any of the preceding claims, wherein in step c) the graphical user interface comprises a geographical map.

5. The method of claim 4, wherein the graphical user interface provides different levels of geographical maps, the levels comprising world map, continental maps, local maps, individual country maps, city maps.

6. The method of any of the preceding claims, wherein the measured one or more network features for each geographical area are visualized by the graphical user interface in different graphical features.

7. The method of claim 6, wherein the graphical feature is selected from the group comprising colour, graphical pattern, flashing or combinations thereof.

8. The method of any of the preceding claims, wherein a request is an IP packet, an e-mail, a DNS request, a FTP download, a VoIP call, or a HTTP request.

9. The method of any of the preceding claims, wherein geographical area is selected from the group comprising country, province, state, or city.

10. System for controlling a firewall system for protecting computer systems from attacks over a network to which the computer system is connected, the system comprising:
means for monitoring current requests to the computer system;
means for measuring one or more network features on the basis of the current requests;
display means for providing a graphical user interface visualizing the measured one or more network features for at least one geographical area of origin of requests, each of said at least one geographical area comprising at least one country;
an input means receiving a user input selecting at least one geographical area;
a database associating, for the at least one geographical area of origin, each country with corresponding IP addresses;
means for automatically generating firewall rules for the computer system on the basis of the IP addresses retrieved from the database for the at least one selected geographical area; and
a filter for filtering a sender or requests from a sender depending on the generated firewall rules for the selected at least one geographical area, wherein the filter comprises of a bandwidth throttling algorithm limiting the bandwidth for the selected at least one geographical area, wherein the limit for a particular sender corresponds to the geographical area of origin, and wherein the sum of all limits for all senders is selected on the basis of the server load or bandwidth usage of the computer system.

## Patentansprüche

1. Verfahren zur Steuerung eines Firewallsystems für den Schutz eines Computersystems vor Angriffen über ein Netzwerk, mit dem das Computersystem verbunden ist, wobei das Verfahren die folgenden Schritte aufweist:
a) Überwachen aktueller Anforderungen an das Computersystem;
b) Messen von einem oder mehreren Netzwerkmerkmalen auf der Grundlage der aktuellen Anforderungen;
c) Bereitstellen einer grafischen Benutzeroberfläche zur optischen Darstellung des gemessenen Netzwerkmerkmals oder der gemessenen Netzwerkmerkmale für mindestens eine geografischen Ursprungszone der Anforderungen, wobei jede der genannten mindestens einen geografischen Zone mindestens ein Land umfasst;
d) Empfangen einer Benutzereingabe zur Auswahl mindestens einer geografischen Zone;
e) Zugreifen auf der Basis der ausgewählten mindestens einen geografischen Zone auf eine Datenbank die für die mindestens eine geografische Ursprungszone jedes Land mit den entsprechenden IP-Adressen verknüpft;
f) automatisch Erzeugen von Firewall-Regeln für das Computersystem auf der Basis der aus der Datenbank für die mindestens eine ausgewählte geografische Zone abgerufenen IP-Adressen, und
g) Filtern eines Absenders oder von Anforderungen von einem Absender in Abhängigkeit von den generierten Firewall-Regeln für die ausgewählte mindestens eine geografische Zone, wobei der Schritt des Filterns die Auslösung eines Bandbreitendrosselungs-Algorithmus zur Begrenzung der Bandbreite für die ausgewählte mindestens eine geografische Zone umfasst, wobei die Begrenzung für einen bestimmten Absender der geografischen Ursprungszone entspricht und wobei die Summe aller Begrenzungen für alle Absender auf der Basis der Serverlast oder der Bandbreitennutzung des Computersystems ausgewählt wird.

2. Verfahren nach Anspruch 1, wobei Schritt a) vorzugsweise auch den Zugriff auf die Datenbank auf Basis der überwachten IP-Adressen umfasst, um daraus Informationen mit Bezug auf das Land abzurufen, aus dem die überwachte Anforderung stammt.

3. Verfahren nach Anspruch 1, wobei die gemessenen Netzwerkmerkmale aus der Gruppe ausgewählt werden, die Folgendes umfasst: Ursprungsland, Paketraten, Anwendungsmerkmale, Übertragungsvolumen, geschätzte Anzahl der Anforderungen in einem definierten Zeitintervall, oder Kombinationen derselben.

4. Verfahren nach einem der vorstehenden Ansprüche, wobei in Schritt c) die grafische Benutzeroberfläche eine geografische Landkarte umfasst.

5. Verfahren nach Anspruch 4, wobei die grafische Benutzeroberfläche verschiedene Ebenen von geografischen Karten umfasst, wobei die Ebenen die Weltkarte, Kontinentalkarten, lokale Karten, Karten einzelner Länder, Stadtpläne umfassen.

6. Verfahren nach einem der vorstehenden Ansprüche, wobei das gemessene eine oder die gemessenen mehreren Netzwerkmerkmale für die jeweilige geografische Zone durch die grafische Benutzeroberfläche in unterschiedlichen grafischen Merkmalen optisch dargestellt werden.

7. Verfahren nach Anspruch 6, wobei das grafische Merkmal aus der Gruppe ausgewählt wird, die Farbe, grafisches Muster, Blinken oder Kombinationen derselben umfasst.

8. Verfahren nach einem der vorstehenden Ansprüche, wobei eine Anforderung ein IP-Paket, eine E-Mail, eine DNS-Abfrage, ein FTP-Download, ein VoIP-Anruf oder eine HTTP-Anforderung ist.

9. Verfahren nach einem der vorstehenden Ansprüche, wobei die geografische Zone aus der Gruppe ausgewählt wird, die Land, Provinz, Staat oder Stadt umfasst.

10. System zur Steuerung eines Firewallsystems für den Schutz eines Computersystems vor Angriffen über ein Netzwerk, mit dem das Computersystem verbunden ist, wobei das System aufweist:
Mittel zur Überwachung aktueller Anforderungen an das Computersystem;
Mittel zur Messung von einem oder mehreren Netzwerkmerkmalen auf der Grundlage der aktuellen Anforderungen;
Anzeigemittel zur Bereitstellung einer grafischen Benutzeroberfläche zur optischen Darstellung des/der gemessenen einen oder mehreren Netzwerkmerkmals oder Netzwerkmerkmale für mindestens eine geografischen Ursprungszone der Anforderungen, wobei jede der genannten mindestens eine geografischen Zonen mindestens ein Land umfasst;
ein Eingabemittel zum Empfang einer Benutzereingabe zur Auswahl mindestens einer geografischen Zone;
eine Datenbank, die für die mindestens eine geografische Ursprungszone jedes Land mit den entsprechenden IP-Adressen verknüpft;
Mittel zur automatischen Erzeugung von Firewall-Regeln für das Computersystem auf der Basis der aus der Datenbank für die mindestens eine ausgewählte geografische Zone abgerufenen IP-Adressen, und
ein Filter zum Filtern eines Absenders oder von Anforderungen von einem Absender in Abhängigkeit von den generierten Firewall-Regeln für die ausgewählte mindestens eine geografische Zone, wobei der Filter einen Bandbreitendrosselungs-Algorithmus umfasst, der die Bandbreite für die ausgewählte mindestens eine geografische Zone begrenzt, wobei die Begrenzung für einen bestimmten Absender der geografischen Ursprungszone entspricht und wobei die Summe aller Begrenzungen für alle Absender auf der Basis der Serverlast oder Bandbreitennutzung des Computersystems ausgewählt wird.

## Revendications

1. Procédé pour contrôler un système de pare-feu pour protéger un système d'ordinateur contre les attaques dirigées contre un réseau auquel le système d'ordinateur est connecté, le procédé comprenant les étapes suivantes :
a. surveiller les requêtes actuelles adressées au système d'ordinateur ;
b. mesurer un ou plusieurs des paramètres du réseau sur la base des requêtes actuelles ;
c. fournir une interface utilisateur graphique pour visualiser un ou plus des paramètres du réseau pour au moins une région géographique de l'origine des requêtes, chacune desdites au moins une région géographique comprenant au moins un pays ;
d. recevoir une entrée utilisateur sélectionnant au moins une région géographique ;
e. accéder, sur la base de ladite au moins une région géographique, à une base de données associant pour ladite au moins une région géographique d'origine, chaque pays avec les adresses IP correspondantes ;
f. générer automatiquement des règles de pare-feu pour le système d'ordinateur sur la base des adresses IP reçues de la base de données pour la ladite au moins une région géographique sélectionnée ;
et
g. filtrer un émetteur ou des requêtes émanant d'un émetteur en fonction des règles de pare-feu générées pour ladite au moins une région géographique sélectionnée, l'étape de filtrage consistant en un algorithme accélérateur de bande passante limitant la largeur de bande pour ladite au moins une région géographique, la limite pour un émetteur particulier correspondant à la région géographique d'origine et la somme de toutes les limites pour tous les émetteurs est choisie sur la base de la charge du serveur ou de l'utilisation de la largeur de bande du système d'ordinateur.

2. Le procédé de la revendication 1, dans lequel l'étape a) comprend aussi de préférence accéder la base de données sur la base des adresses IP surveillées pour y récupérer les informations concernant le pays d'où provient la requête surveillée.

3. Procédé selon la revendication 1, dans lequel le paramètre mesuré du réseau est choisi dans le groupe comprenant : le pays d'origine, les taux de paquets, les caractéristiques des applications, le volume de transmission, le nombre estimé de requêtes dans un intervalle de temps défini ou des combinaisons de ces paramètres.

4. Le procédé selon une quelconque des revendications précédentes, dans lequel dans l'étape c) l'interface utilisateur graphique comprend une carte géographique.

5. Le procédé de la revendication 4, dans lequel l'interface utilisateur graphique fournit différents niveaux de cartes géographiques, les niveaux comprenant la carte du monde, les cartes des continents, les cartes locales, les cartes des pays individuels, les plans de ville.

6. Procédé selon une quelconque des revendications précédentes dans lequel ledit paramètre mesuré du réseau ou plusieurs pour chaque région géographique sont visualisés sur une interface utilisateur graphique dans différentes caractéristiques graphiques.

7. Procédé selon la revendication 6, dans lequel la caractéristique graphique est choisie dans le groupe comprenant la couleur, le dessin graphique, le clignotement ou des combinaisons de ces derniers éléments.

8. Procédé selon une quelconque des revendications précédentes dans lequel une requête est un paquet IP, un e-mail, une requête DNS, un téléchargement FTP, un appel VoIP ou une requête HTTP.

9. Procédé selon une quelconque des revendications précédentes dans lequel la région géographique est choisie dans le groupe comprenant pays, province, état ou ville.

10. Système pour contrôler un système de pare-feu pour protéger les systèmes d'ordinateurs contre des attaques contre le réseau auquel l'ordinateur est connecté, le système comprenant :
des moyens pour surveiller les requêtes actuelles adressées au système d'ordinateur ;
des moyens pour mesurer un ou plusieurs des paramètres du réseau sur la base des requêtes actuelles ;
des moyens d'affichage pour fournir une interface utilisateur graphique visualisant le paramètre mesuré du réseau ou plusieurs paramètres du réseau pour au moins une région géographique d'origine des requêtes, chacune des au moins une région géographique comprenant au moins un pays.
un moyen d'entrée recevant une entrée utilisateur sélectionnant au moins une région géographique ;
une base de données associant pour ladite au moins une région géographique d'origine, chaque pays avec des adresses IP correspondantes ;
des moyens pour générer automatiquement des règles de pare-feu pour le système d'ordinateur sur la base des adresses IP récupérées de la base de données pour ladite au moins une région géographique sélectionnée ; et
un filtre pour filtrer un émetteur ou des requêtes venant d'un émetteur en fonction des règles de pare-feu générées pour ladite au moins une région géographique sélectionnée, le filtre comprenant un algorithme accélérateur de bande passante limitant la largeur de bande pour ladite au moins une région géographique sélectionnée, la limite d'un émetteur particulier correspondant à la région géographique d'origine et la somme de toutes les limites pour tous les émetteurs étant choisie sur la base de la charge du serveur ou de l'utilisation de la largeur de bande du système d'ordinateur.
